**Europäisches Patentamt**

**European Patent Office**

**Office européen des brevets**

(19)

(11) Veröffentlichungsnummer: **0 094 054**

**B1**

(12) # EUROPÄISCHE PATENTSCHRIFT

(45) Veröffentlichungstag der Patentschrift:
**02.09.87**

(51) Int. Cl.⁴: **G 01 D 1/00, G 01 D 3/02**

(21) Anmeldenummer: **83104466.4**

(22) Anmeldetag: **06.05.83**

(54) **Messgerät zum Messen und Verarbeiten von Kenngrössen der Umgebungsatmosphäre.**

(30) Priorität: **12.05.82 DE 3217798**

(43) Veröffentlichungstag der Anmeldung:
**16.11.83 Patentblatt 83/46**

(45) Bekanntmachung des Hinweises auf die Patenterteilung:
**02.09.87 Patentblatt 87/36**

(84) Benannte Vertragsstaaten:
**AT BE CH DE FR GB IT LI LU NL SE**

(56) Entgegenhaltungen:
**DD-A-123 395**
**GB-A-1 462 480**

**TELECOM REPORT SIEMENS, 2. Jahrgang, Heft 2, April1979; ZELLER: "Dak5 - eine Datenaustauscheinheit des Mikrocomputersystems MES80 zur Rechnerkopplung"Seiten 106-110**
**ELEKTRONIK, 1980, Heft 6 "Terminals - immer kompakter und intelligenter" Seite 14**
**ELEKTRONISCHE RECHENANLAGEN, 22. Jahrgang, 1980, Heft 2; D.ECKERT "Ein Implementierungsverfahren fürEmulatoren zur Verbindung von Terminal- mit Hauptrechensystemen", Seite 83**

(73) Patentinhaber: **Hübner, Hans Jörg, Dipl.- Kfm., Katthagen 24, D-4400 Münster (DE)**

(72) Erfinder: **Hübner, Hans Jörg, Dipl.- Kfm., Katthagen 24, D-4400 Münster (DE)**

(74) Vertreter: **Gesthuysen, Hans Dieter, Dipl.- Ing., Patentanwälte Gesthuysen + von Rohr Huyssenallee 15 Postfach 10 13 33, D-4300 Essen 1 (DE)**

EP 0 094 054 B1

## Beschreibung

Die Erfindung betrifft ein Meßgerät zum Messen und Verarbeiten von Kenngrößen der Umgebungsatmosphäre, mit einer internen Stromquelle, einer Meßanordnung, einer mit der Meßanordnung verbundenen Normierungsstufe zur Nomierung mit mehreren vorgegebenen Normierungsfunktionen, einer Betätigungseinheit mit einer Mehrzahl von jeweils einer bestimmten Kenngröße zugeordneten Betätigungselementen, einer Speichereinheit und einer Anzeigeeinheit, wobei mit der Meßanordnung eine Kenngröße oder mehrere Kenngrößen und ein für die Normierung der jeweiligen Kenngröße notwendiger Parameter oder mehrere dafür notwendige Parameter meßbar sind und wobei nach dem Messen einer Kenngröße der Meßwert im Meßgerät auf einen oder mehrere Parameter normierbar und der normierte und ggf. auch der absolute Meßwert anzeigbar und speicherbar ist bzw. sind.

Das Messen und Verarbeiten von Kenngrößen der Umgebungsatmosphäre ist in vielen Anwendungsfällen notwendig, sei es, um längerfristige Informationen über die Umgebungsatmosphäre zu gewinnen, sei es, um kurzfristige Informationen zu erhalten, die unmittelbar ausgewertet werden. Insbesondere bei gasbelasteten Umgebungsatmosphären sind derartige Messungen in vielen Fällen für die Sicherheit der in solchen Umgebungsatmosphären tätigen Personen von entscheidender Bedeutung, um nämlich ggf. Sicherungsmaßnahmen, beispielsweise eine Entlüftung od. dgl., oder Rettungsmaßnahmen einleiten zu können. Insbesondere im Untertäg-Bergbau sind derartige Verfahren seit langem bekannt und werden ständig praktiziert.

Mit dem bekannten Meßgerät der eingangs genannten Art, von dem die Erfindung ausgeht (GB-A-1 462 480), erfolgt eine Überwachung der Umgebungsatmosphäre, insbesondere der Umgebungsatmosphäre am Arbeitsplatz von Personen. Grundlage des dort angewandten Verfahrens ist die Erkenntnis, daß eine Überwachung der Umgebungsatmosphäre am Arbeitsplatz aus sicherheitstechnischen, arbeitsmedizinischen und anderen Gründen häufig von erheblicher Bedeutung ist. Dabei wird allgemein auf Kenngrößen der Umgebungsatmosphäre hingewiesen, insbesondere auf die Lufttemperatur, die Luftfeuchtigkeit, die Luftgeschwindigkeit und die von angrenzenden Flächen abgegebene Wärme. Aufgabe des bekannten Meßgeräts ist eine Ermittlung wirklich aussagekräftiger Angaben, beispielsweise einer Angabe der relativen Luftfeuchtigkeit unter Berücksichtigung der Luftgeschwindigkeit.

Um eine Normierung von Kenngrößen der Umgebungsatmosphäre im zuvor erläuterten Sinne zu gewinnen, wird bei dem bekannten Meßgerät ein Analogrechner verwendet, der unter anderem eine Mehrzahl von jeweils einer bestimmten Kenngröße zugeordneten Betätigungselementen und eine Speichereinheit aufweist. Dieser Analogrechner arbeitet mit verschiedenen fest vorgegebenen Normierungsfunktionen. Die Verknüpfung der Meßwerte der Kenngrößen und Parameter, der Normierungsfunktion und der normierten Mäßwerte miteinander ist fest vorgegeben und erfolgt im Analogrechner automatisch. Ähnliches gilt auch für die Anzeige der absoluten oder normierten Meßwerte, die stets alle angezeigt werden.

Das zuvor erläuterte, bekannte Meßgerät ist zweiteilig ausgeführt, weist nämlich den ortsfest angeordneten, die Stromquelle, die Normierungsstufe, die Betätigungseinheit, die Speichereinheit und die Anzeigeeinheit aufweisenden Analogrechner und einen davon räumlich getrennten, die Meßanordnung aufweisenden, mit dem Analogrechner über ein Verbindungskabel verbundenen Meßkopf auf.

Die Konstruktion des bekannten Meßgeräts führt zu einer schlechten Handhabbarkeit, insbesondere was Gewicht und Größe betrifft. Die vollautomatische Funktion mit den mehreren, im Analogrechner fest vorgegebenen Normierungsfunktionen, die aus den Meßgrößen des Meßkopfs unterschiedliche Kenngrößen zu errechnen erlauben, ist möglicherweise schaltungstechnisch einfach, stellt aber hinsichtlich der Flexibilität kein Optimum dar.

Der Lehre der Erfindung liegt nun die Aufgabe zugrunde, ein Meßgerät der eingangs genannten Art anzugeben, das schaltungstechnisch und handhabungstechnisch einfach und gleichwohl anwendungstechnisch möglichst flexibel ist.

Das erfindungsgemäße Meßgerät, bei dem die zuvor aufgezeigte Aufgabe gelöst ist, ist dadurch gekennzeichnet, daß das Meßgerät als tragbares Kleingerät ausgeführt ist und daß die Meßanordnung und die Normierungsstufe durch Betätigen eines Betätigungselementes der Betätigungseinheit gleichzeitig auf die jeweilige Kenngröße und eine zugeordnete Normierungsfunktion umschaltbar sind.

Das erfindungsgemäße Meßgerät ist also ein einteiliges Kompaktgerät, das leicht handhabbar und anwendungstechnisch sehr flexibel ist. Die anwendungstechnische Flexibilität ist zunächst dadurch gegeben, daß mehrere Normierungsfunktionen, und zwar mehrere Normierungsfunktionen je Kenngröße und/oder mehrere Normierungsfunktionen für mehrere Kenngrößen, einstellbar sind. So kann mit dem erfindungsgemäßen Meßgerät mittels einer Normierungsfunktion eine Normierung der gemessenen Lufttemperatur auf den Luftdruck an der Erdoberfläche, mittels einer anderen Normierungsfunktion eine Normierung der Lufttemperatur auf eine bestimmte relative Luftfeuchtigkeit erfolgen. Andererseits kann mittels einer Normierungsfunktion eine Normierung der gemessenen Lufttemperatur auf den Luftdruck an der Erdoberfläche, andererseits eine Normierung der gemessenen Luftfeuchtigkeit auf eine bestimmte Luftgeschwindigkeit erfolgen. Das sind natürlich lediglich Beispiele, die besonders häufig verwendete Normierungstechniken betreffen. Wichtig ist, daß das erfindungsgemäße Meßgerät handhabungstechnisch dadurch extrem einfach ist, daß durch Betätigen eines Betätigungselements der Betätigungseinheit nicht nur die Meßanordnung, sondern auch die Normierungsstufe automatisch passend umgeschaltet werden. Erfindungsgemäß wird also nur derjenige Meßwert angezeigt der gerade benötigt wird, wohingegen im Stand der Technik, von dem die Erfindung ausgeht, immer alle Meßwerte angezeigt und verarbeitet wurden, so daß eine Verkleinerung des Meßgeräts des Standes der Technik zu einem tragbaren Kleingerät als unmöglich erschien.

Als Parameter für die jeweils interessierende Kenngröße kommen alle Arten von Parameter in Frage, also insbesondere die weiter oben beispielhaft erläuterten Fremdparameter, aber auch Normierungsparameter, die durchaus auch die Kenngröße selbst, in einer Normatmosphäre gemessen, sein können. Das gilt beispielsweise für Nullpunktskorrekturmessungen usw.. Hinsichtlich der Normierungsfunktionen gilt, daß diese natürlich in der Normierungsstufe, wie im Stand der Technik, veränderbar sein können, daß also die Normierungsfunktionen wie im Stand der Technik umprogrammierbar sind.

Für die zeitabhängige Messung von Kenngrößen ist vorzugsweise ein Zeitgeber vorgesehen, wobei die Zeit dann automatisch zum Meßwert jeder Kenngröße abgespeichert und ggf. auch angezeigt werden kann.

Für ortsabhängige Messungen von Kenngrößen, wie sie im Regelfall stattfinden werden, sollte eine Ortseingabetastatur vorgesehen sein, über die dann z. B. Codenummern der Orte eingegeben werden können. Dabei ist die Betätigungseinheit vorzugsweise zusätzlich als Ortseingabetastatur ausgebildet.

Um die Gefahr zu verringern, daß es von einer Bedienungsperson manchmal vergessen wird, die Codenummer eines Meßortes einzugeben, empfiehlt es sich, die Meßanordnung erst nach Durchführung einer Ortseingabe zur Durchführung einer Messung freizuschalten.

Nach einer vorteilhaften Weiterbildung ist in dem Meßgerät eine Schwellwertstufe vorgesehen und der Normierungsstufe nachgeschaltet. Die Schwellwertstufe ist vorzugsweise mit einer akustischen und/oder optischen Warneinrichtung verbunden und synchron zu der Meßanordnung und der Normierungsstufe umschaltbar. Über die Schwellwertstufe kann in Verbindung mit der Warneinrichtung unmittelbar ein Warnsignal ausgelöst und abgegeben werden, durch das die Bedienungsperson des Meßgerätes, beispielsweise unter Tage, über eine gefährliche Entwicklung einer Kenngröße der Umgebungsatmosphäre informiert wird. In Verbindung mit der Normierungsstufe kommt der Schwellwertstufe besondere Bedeutung zu, da bei Vorgabe normierter Meßwerte ohne weiteres vorab Schwellwerte für höchstzulässige Gaskonzentrationen usw. vorgebbar sind.

Im Sinne einer optimalen Integration ist es zweckmäßig, daß die Normierungsstufe des erfindungsgemäßen Meßgeräts einen Mikroprozessor, und zwar vorzugsweise einen frei programmierbaren Mikroprozessor, aufweist. Für den Anschluß des Meßgeräts an einen Zentralrechner ist es weiter zweckmäßig, einen Interface-Anschluß vorzusehen. Besonders praktisch ist es dabei, wenn das ansonsten tragbare, also von einer Bedienungsperson mitführbare Meßgerät, wie an sich bekannt, an einer Schmalseite eine Steckerleiste aufweist, die ggf. abdeckbar ist und die als solches in eine Fassung am Interface des Zentralrechners eingesteckt werden kann. Von dem Zentralrechner kann im übrigen auch eine Umprogrammierung des Meßgeräts erfolgen, insbesondere des freiprogrammierbaren Mikroprozessors der Normierungsstufe. Im übrigen kann die Normierungsstufe auch Teil eines weitere Schaltungsgruppen aufweisenden, ggf. programmierbaren Mikroprozessors sein.

Weiter oben ist erläutert worden, daß ein wesentlicher Effekt bei dem erfindungsgemäßen Meßgerät darin besteht, daß immer nur der Meßwert angezeigt wird, der gerade benötigt wird. Hierzu ist es zweckmäßig, daß die Anzeigeeinheit zusätzlich zur numerischen Anzeige auch noch eine Kenngrössenanzeige aufweist, so daß, beispielsweise über entsprechende Symbole, die jeweils gerade gemessene und angezeigte Kenngröße identifiziert werden kann.

Mit dem erfindungsgemäßen Mäßgerät ist es möglich, schnell und effektiv klare und aussagekräftige Angaben zu einer Vielzahl von Kenngrößen und Parametern zu gewinnen, wobei die moderne Elektronik zusätzlich die Möglichkeit bietet, umfangreiche und vielschichtige Auswertungen vorzunehmen, beispielsweise für einen Bereich unter Tage regelrechte "Wetterkarten" anzulegen, was mit den früheren Techniken viel zu aufwendig, also praktisch unmöglich gewesen ist.

Im folgenden wird die Erfindung anhand einer lediglich ein Ausführungsbeispiel darstellenden Zeichnung näher erläutert; es zeigt

Fig. 1 in einem schematischen Diagramm die Funktionsbeziehungen beim Messen und Verarbeiten von Kenngrößen der Umgebungsatmosphäre, hier im Wetterstrom unter Tage,

Fig. 2 ein Blockschaltbild einer Anlage zum Messen und Verarbeiten von Kenngrößen der Umgebungsatmosphäre,

Fig. 3 ein Blockschaltbild eines Meßgerätes für eine Anlage nach Fig. 2,

Fig. 4 ein Ausführungsbeispiel eines Meßgerätes gemäß Fig. 3,

Fig. 5 u 6. Diagramme für mögliche Normierungen bzw. Kalibrierungen bei einem Meßgerät gemäß Fig. 3.

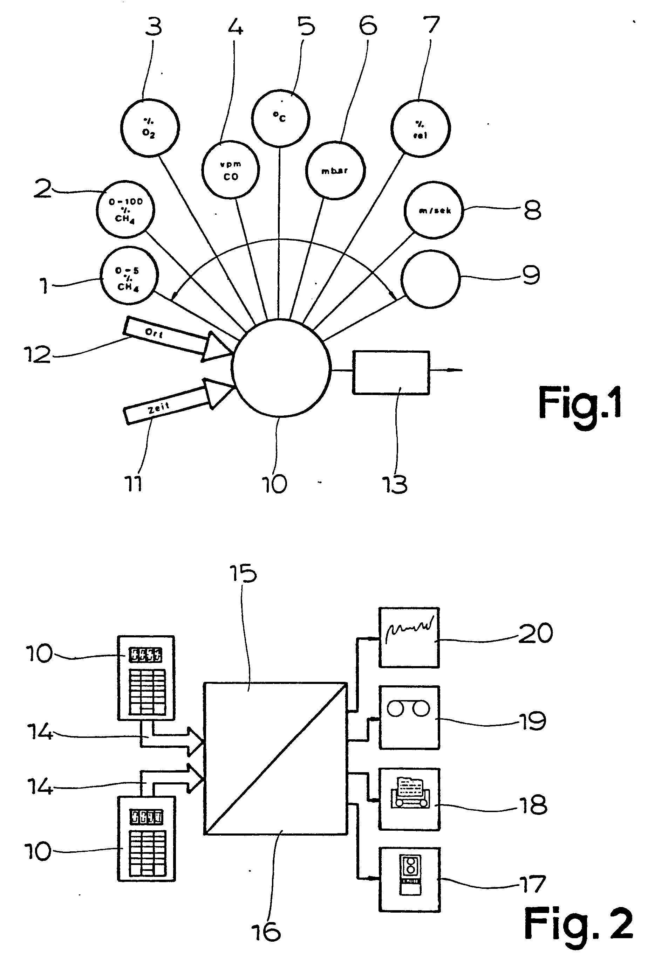

In der schematischen Darstellung gemäß Fig. 1 erkennt man eine Mehrzahl von Kenngrößen bzw. Parametern der Umgebungsatmosphäre, nämlich verschiedene Gaskonzentrationen 1 bis 4, Lufttemperatur 5, Luftdruck 6, relative Luftfeuchtigkeit 7, Luftgeschwindigkeit 8 und einen nicht näher spezifizierten Parameter 9. All diese Kenngrößen bzw. Parameter werden einem Meßgerät 10 zugeführt. Außer den zuvor erwähnten und schematisch dargestellten Kenngrößen und Parametern werden im Meßgerät 10 auch noch die Zeit 11 und der Ort der Messung 12 festgehalten. All diese Daten werden in einer Speichereinheit 13 gespeichert, ggf. nach vorheriger Verarbeitung, Anzeige usw., und können von der Speichereinheit 13 jeweils in eine hier nicht dargestellte Zentraleinheit abgerufen werden.

Fig. 2 zeigt deutlicher, wie eine entsprechende Anlage zum Messen und Verarbeiten von Kenngrößen der Umgebungsatmosphäre aufgebaut sein kann. Dargestellt sind zwei Meßgeräte 10, die, wie eine Mehrzahl anderer, nicht dargestellter Meßgeräte, über Interface-Anschlüsse 14 an das Interface 15 eines Zentralrechners 16 anschließbar sind. In diesem Zentralrechner 16 können sämtliche in den Speichern 13 der Meßgeräte 10 gespeicherten Daten über die verschiedenen Kenngrößen und Parameter 1 bis 9, 11, 12 ausgewertet, aufgearbeitet, geordnet, korrigiert, normiert usw. werden. Der Zentralrechner 16 seinerseits kann mit einem externen Computer 17, einem Drucker 18, einer Speichereinheit 19 und einem Benutzerterminal 20, also üblichen Peripheriegeräten von Rechnern verbunden sein. Weisen die Meßgeräte 10 entsprechende programmierbare Speicher auf, wie sie heute in Mikroprozessoren umfangreich enthalten sind, so läßt sich von dem Zentralrechner 16 jedes Meßgerät ggf. programmieren.

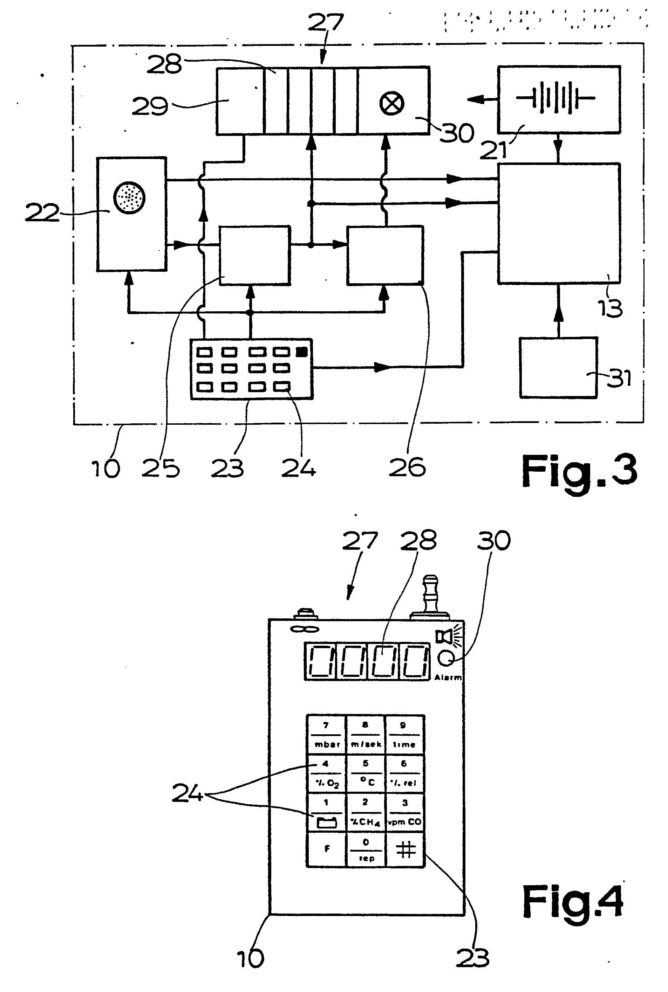

Ein Blockschaltbild eines Meßgerätes 10 für eine Anlage gemäß Fig. 2 ist in Fig. 3 dargestellt. Hier ist zunächst angedeutet eine Stromquelle 21 zur Versorgung des gesamten Meßgerätes 10, das als solches, insbesondere beim Einsatz unter Tage, natürlich frei beweglich, nämlich tragbar sein muß. Weiterhin weist das Meßgerät 10 eine Meßanordnung 22 auf, die, wie hier nicht weiter dargestellt ist, eine Meßkammer und eine Pumpe zum Ansaugen einer Gasprobe in die Meßkammer, ggf. auch mehrere Meßkammern, aufweisen kann. Wie derartige Meßanordnungen arbeiten, ist aus dem Stand der Technik bekannt und bedarf hier keiner detaillierten Erläuterung.

Mit der Meßanordnung 22 verbunden ist eine Betätigungseinheit 23 sowie die eingangs schon erwähnte Speichereinheit 13. Die Betätigungseinheit 23 weist eine Mehrzahl von nur andeutungsweise dargestellten Betätigungselementen 24 in Form einer Tastatur auf. Die Meßanordnung 22 ist außerdem mit einer Normierungsstufe 25 und einer der

Normierungsstufe 25 nachgeschalteten Schwellwertstufe 26 verbunden. Die Betätigungseinheit 23, die Normierungsstufe 25 und die Schwellwertstufe 26 sind mit einer Anzeigeeinheit 27 verbunden, wobei die Anzeigeeinheit 27 eine numerische Anzeige 28 zur Anzeige des Meßwertes einer Kenngröße, eine Kenngrößenanzeige 29 und eine optische Warneinrichtung 30, nämlich eine Warnlampe, aufweist. Schließlich ist noch ein Zeitgeber 31 vorgesehen und mit der Speichereinheit 13 verbunden, so daß zu allen gespeicherten Daten jeweils die entsprechende Zeit mitgespeichert werden kann.

Die Betätigungseinheit 23 erlaubt es, die Meßanordnung 22 auf die Messung unterschiedlicher Kenngrößen und Parameter umzuschalten. Diese Umschaltung kann natürlich auch automatisch erfolgen, wenn man beispielsweise eine spezielle Kenngröße messen will, zu dieser gewünschten Kenngröße jedoch entsprechende Parameter, die für ihre Einordnung von Bedeutung sind, gemessen werden sollen. Die Betätigungseinheit 23 mit den tastenartigen Betätigungselementen 24 dient gleichzeitig als Ortseingabetastatur, d. h. über die Betätigungselemente 24 der Betätigungseinheit 23 können Ortsdaten, beispielsweise spezielle Codenummern eingegeben werden. Auf diese Weise ist es möglich, Meßwerte bestimmter Kenngrößen bestimmten Orten zuzuordnen, was insbesondere unter Tage von erheblicher Bedeutung ist.

Nicht erkennbar ist in Fig. 3, daß die von der Meßanordnung 22 gemessenen Meßwerte dann, wenn sie analog gemessen werden, über einen Analog/Digital-Umsetzer geführt und in der Speichereinheit 13 digital abgespeichert werden können.

Wesentlich ist, daß mit dem in Fig. 3 dargestellten Meßgerät 10 über die Kenngrößenanzeige 29 sofort erkennbar ist, welche Kenngröße gerade gemessen und angezeigt wird, daß die numerische Anzeige 28 der Anzeigeeinheit 27 den jeweiligen Meßwert klar und deutlich erkennen läßt, daß über die Warneinrichtung 30 von der Schwellwertstufe 26 her die jeweilige Bedienungsperson bei Überschreiten des Schwellwertes der jeweiligen Kenngröße akut gewarnt werden kann, daß irgendwelche Notizen von Meßwerten nicht mehr gemacht werden müssen und daß eine optimale Auswertbarkeit der gemessenen, verarbeiteten und gespeicherten Daten gegeben ist.

Nicht dargestellt ist in Fig. 3, daß die Speichereinheit 13 einen eigenen Energiepuffer aufweisen kann, so daß selbst bei einem Ausfall der Stromquelle 21 der bis dahin gespeicherte Speicherinhalt der Speichereinheit 13 nicht verlorengeht.

Fig. 4 zeigt in Frontansicht ein Meßgerät 10 gemäß Fig. 3. Erkennbar ist die Betätigungseinheit 23 des Meßgerätes 10 mit den Betätigungselementen 24. Die Betätigungselemente 24 sind hier erkennbar doppelt belegt, also als doppelt belegte Funktionstasten ausgeführt. Sie lassen nämlich einerseits eine Auswahl der jeweils zu messenden Kenngröße bzw. des jeweils interessierenden Parameters zu, erlauben andererseits eine codierte Eingabe des Meßortes in Form von Codenummern. Erkennbar ist ferner die Anzeigeeinheit 27 mit der numerischen Anzeige 28 und der Warneinrichtung 30.

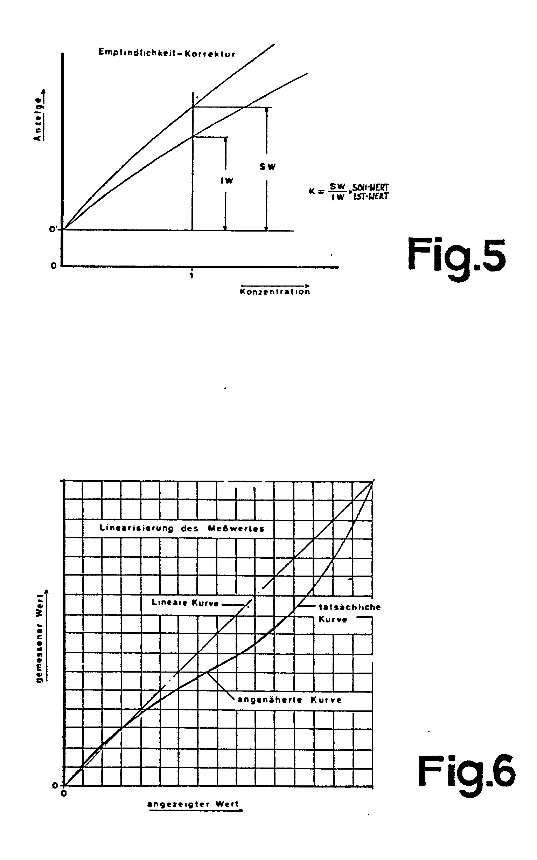

Zuvor ist in Verbindung mit Fig. 3 erläutert worden, daß das Meßgerät 10 eine Normierungsstufe 25 aufweist. Diese Normierungsstufe 25 ist natürlich insbesondere dann auf einfache Weise vorsehbar, wenn moderne mikroelektronische Bauteile, beispielsweise Mikroprozessoren, Verwendung finden. Über die Normierungsstufe 25 kann eine Normierung des jeweiligen Meßwertes einer Kenngröße auf einen oder mehrere Parameter erfolgen. Bei dem Diagramm in Fig. 5 wird der Meßwert Gaskonzentration, beispielsweise $CH_4$, entsprechend der sich mit der Konzentration des zu messenden Gases ändernden Empfindlichkeit der Meßanordnung 22 korrigiert. Das ist über die Normierungsstufe 25 bei vorgegebenem Empfindlichkeitsverlauf der Meßanordnung 22 ohne weiteres möglich.

Bei dem Diagramm in Fig. 6 ist eine Linearisierung einer Meßkurve einer Kenngröße erkennbar, die gleichfalls über die Normierungsstufe 25 erfolgen kann.

Abschließend ist der Vollständigkeit halber noch darauf hinzuweisen, daß natürlich die Anzahl der Kenngrößen und Parameter ganz nach Belieben und Anwendungsbereich gewählt werden kann, was letztlich eine Kostenfrage ist.

Abschließend soll nochmals kurz die Funktion des zuvor in verschiedenem Zusammenhängen erläuterten Meßgerates 10 im Rahmen der Anlage gemäß Fig. 2 erläutert werden:

Die entsprechende Bedienungsperson, beispielsweise ein Steiger unter Tage, überprüft auf einem Rundgang eine Mehrzahl von Meßorten, die jeweils durch eine ortsfest angebrachte Codenummer identifiziert sind. An einem bestimmten Ort angelangt, gibt diese Bedienungsperson über die Betätigungselemente 24 der Betätigungseinheit 23 die Codenummer des Ortes ein; diese Codenummer wird in der Speichereinheit 13 gespeichert. Anschließend wird die Meßanordnung 22 freigegeben und die Bedienungsperson wählt die zu messende Kenngröße, beispielsweise die Lufttemperatur 5, aus. Gleichzeitig mit der Lufttemperatur 5, die die eigentliche Kenngröße darstellt, werden zur Gewinnung einer relativen Arbeitstemperatur der Luftdruck 6, die relative Luftfeuchtigkeit 7 und die Luftgeschwindigkeit 8 als Parameter gemessen. Anschließend wird einerseits die Lufttemperatur 5 absolut, andererseits ein über die Normierungsstufe 25 auf die Parameter Luftdruck 6, relative Luftfeuchtigkeit 7 und Luftgeschwindigkeit 8 normierter Meßwert der Lufttemperatur 5 gespeichert. Der letztgenannte normierte Meßwert wird auch angezeigt, da er eine Aussage über die tatsächliche physische Belastung der an diesem Ort befindlichen Personen gibt. Dieser normierte Meßwert wird außerdem der Schwellwertstufe 26 zugeführt, so daß dann, wenn dieser relative Meßwert an irgendeinem Ort eine absolute Obergrenze überschreitet, unmittelbar von der Warneinrichtung 30 ein optisches Warnsignal abgegeben wird. Mit dem erläuterten Meßgerät 10 läßt sich also für die Bedienungsperson eine aktuelle Aussage gewinnen, wobei gleichzeitig längerfristige Untersuchungen und Beobachtungen über den Zentralrechner 16, an den das Meßgerät 10 später angeschlossen wird, verwirklicht werden können. Das Meßgerät 10 stellt, auf den Untertagebetrieb bezogen, gewissermaßen ein elektronisches Wetterbuch dar.

## Patentansprüche

1. Meßgerät zum Messen und Verarbeiten von Kenngrößen der Umgebungsatmosphäre, mit einer internen Stromquelle (21), einer Meßanordnung (22), einer mit der Meßanordnung (22) verbundenen Normierungsstufe (25) zur Normierung mit mehreren vorgegebenen Normierungsfunktionen, einer Betätigungseinheit (23) mit einer Mehrzahl von jeweils einer bestimmten Kenngröße zugeordneten Betätigungselementen (24), einer Speichereinheit (13) und einer Anzeigeeinheit (27), wobei mit der Meßanordnung (22) eine Kenngröße oder mehrere Kenngrößen und ein für die Normierung der jeweiligen Kenngröße notwendiger Parameter oder mehrere dafür notwendige Parameter meßbar sind und wobei nach dem Messen einer Kenngröße der Meßwert im Meßgerät (10) auf einen oder mehrere Parameter normierbar und der normierte und ggf. auch der absolute Meßwert anzeigbar und speicherbar ist bzw. sind, dadurch gekennzeichnet, daß das Meßgerät (10) als tragbares Kleingerät ausgeführt ist und daß die Meßanordnung (22) und die Normierungsstufe (25) durch Betätigen eines Betätigungselementes (24) der Betätigungseinheit (23) gleichzeitig auf die jeweilige Kenngröße und eine zugeordnete Normierungsfunktion umschaltbar sind.

2. Meßgerät nach Anspruch 1, dadurch gekennzeichnet, daß ein Zeitgeber (31) vorgesehen ist und daß zu jedem Meßwert einer Kenngröße die Zeit automatisch speicherbar ist.

3. Meßgerät nach Anspruch 1 oder 2, dadurch gekennzeichnet, daß eine Ortseingabetastatur vorgesehen ist und daß zu jedem Meßwert einer Kenngröße der Meßort speicherbar ist.

4. Meßgerät nach Anspruch 3, dadurch gekennzeichnet, daß die Betätigungseinheit (23) zusätzlich als Ortseingabetastatur ausgebildet ist.

5. Meßgerät nach Anspruch 3 oder 4, dadurch gekennzeichnet, daß die Meßanordnung (22) erst nach der Durchführung einer Ortseingabe zur Durchführung einer Messung freigeschaltet ist.

6. Maßgerät nach einem der Ansprüche 1 bis 5, dadurch gekennzeichnet, daß eine Schwellwertstufe (26) vorgesehen und der Normierungsstufe (25) nachgeschaltet ist und daß, vorzugsweise, die Schwellwertstufe (26) mit einer akustischen und/oder optischen Warneinrichtung (30) verbunden ist.

7. Meßgerät nach Anspruch 6, dadurch gekennzeichnet, daß die Schwellwertstufe (26) synchron zu der Meßanordnung (22) und der Normierungsstufe (25) umschaltbar ist.

8. Meßgerät nach einem der Ansprüche 1 bis 7, dadurch gekennzeichnet, daß die Normierungsstufe (25) einen Mikroprozessor, vorzugsweise einen frei programmierbaren Mikroprozessor, aufweist.

9. Meßgerät nach einem der Ansprüche 1 bis 8, dadurch gekennzeichnet, daß das Meßgerät (10) über einen Interface-Anschluß (14) an einen Zentralrechner (16) anschließbar ist und daß, vorzugsweise, der frei programmierbare Mikroprozessor der Normierungsstufe (25) von dem Zentralrechner (16) aus umprogrammierbar ist.

10. Meßgerät nach einem der Ansprüche 1 bis 9, dadurch gekennzeichnet, daß die Anzeigeeinheit (27) eine Kenngrößenanzeige (29) aufweist.

## Claims

1. Measuring equipment to measure the characteristics of ambient atmosphere and to process the measurements, with an internal source of current (21), a measuring device (22), a normalization stage (25) connected to measuring device (22) for normalization with several prescribed normalization functions, an actuation unit (23) with a number of actuation elements (24) each corresponding to the measurement of a specific characteristic, a storage unit (13) and an indicator unit (27), in which one or more characteristics and a parameter necessary for the normalization of the particular characteristic, or several parameters that are necessary for this are measurable by the measuring device (22), and in which after measurement of a characteristic the measured value is normalizable in the measuring equipment (10) relatively to one or more parametrs, and the normalized measured value, and if desired the absolute measured value also, can be indicated and stored, characterized in that the measuring equipment (10) is constructed as a small portable equipment and that the measuring device (22) and the normalization stage (25) are by operation of an actuation element (24) of the actuation unit (23) switchable simultaneously to the measurement of a particular characteristic and to an associated normalization function.

2. Measuring equipment according to Claim 1, characterised in that a timer (31) is provided and that the time can be automatically stored together with each measured value of a characteristic.

3. Measuring equipment according to Claim 1 or 2, characterized in that a keyboard indicating location is provided and the point of measurement is storable together with each measurement of a characteristic.

4. Measuring equipment according to Claim 3, characterized in that the actuation unit (23) is additionally constructed as the keyboard indicating location.

5. Measuring equipment according to Claim 3 or 4, characterized in that only after an indication of location has been given that the measuring device (22) is connected for a measurement to be performed.

6. Measuring equipment according to one of Claims 1 to 5, characterized in that a threshold-value stage (26) is provided after the normalization stage (25) and that, preferably, the threshold-value stage (26) is connected to acoustical and/or optical warning equipment (30).

7. Measuring equipment according to Claim 6, characterized in that the threshold-value stage (26) is switchable synchronously to the measuring device (22) and to the normalization stage (25).

8. Measuring equipment according to one of Claims 1 to 7, characterized in that the normalization stage (25) possesses a microprocessor, preferably a freely-programmable microprocessor.

9. Measuring equipment according to one of Claims 1 to 8, characterized in that measuring equipment (10) is connectable to a central computer (16) via an interface connection (14) and that, preferably, the freely-programmable microprocessor is re-programmable from the central computer (16).

10. Measuring equipment according to one of Claims 1 to 9, characterized in that the indicator unit (27) provides characteristic indicator (29).

## Revendications

1. Appareil de mesure pour la mesure et le traitement de grandeurs caractéristiques de l'atmosphère ambiante, cet appareil comprenant une source de courant interne (21), un montage de mesure (22), un étage de normalisation (25) raccordé au montage de mesure (22) en vue d'effectuer la normalisation avec plusieurs fonctions de normalisation prédéterminées, une unité de commande (23) pourvue de plusieurs éléments de commande (24) attribués chacun à une grandeur caractéristique déterminée, une unité de mémorisation (13) et une unité d'affichage (27), le montage de mesure (22) permettant de mesurer une ou plusieurs grandeurs caractéristiques et un ou plusieurs paramètres nécessaires pour la normalisation de chaque grandeur caractéristique tandis que, après la mesure d'une grandeur caractéristique, la valeur de mesure peut être normalisée dans

**0 094 054**

l'appareil de mesure (10) à un ou plusieurs paramètres, et la valeur de mesure normalisée, ainsi qu'éventuellement également la valeur de mesure absolue peut ou peuvent être affichée(s) et mémorisée(s), caractérisé en ce que l'appareil de mesure (10) est réalisé sous forme d'un petit appareil portatif et en ce que le montage de mesure (22) et l'étage de normalisation (25) peuvent être commutés simultanément à chaque grandeur caractéristique et à une fonction de normalisation attribuée en actionnant un élément de commande (24) de l'unité de commande (23).

2. Appareil de mesure selon la revendication 1, caractérisé en ce qu'on prévoit un générateur de rythme (31) et en ce que, pour chaque valeur de mesure d'une grandeur caractéristique, le temps peut être mémorisé automatiquement.

3. Appareil de mesure selon la revendication 1 ou 2, caractérisé en ce qu'on prévoit un clavier d'introduction de position et en ce que, pour chaque valeur de mesure d'une grandeur caractéristique, la position de mesure peut être mémorisée.

4. Appareil de mesure selon la revendication 3, caractérisé en ce que l'unité de commande (23) est, en outre, réalisée sous forme d'un clavier d'introduction de position.

5. Appareil de mesure selon la revendication 3 ou 4, caractérisé en ce que le montage de mesure (22) n'est libéré qu'après avoir effectué une introduction de position pour pratiquer une mesure.

6. Appareil de mesure selon une des revendications 1 à 5, caractérisé en ce qu'on prévoit un étage à valeur seuil (26) qui est monté à la suite de l'étage de normalisation (25) et en ce que, de préférence, l'étage à valeur seuil (26) est raccordé à un dispositif avertisseur acoustique et/ou optique (30).

7. Appareil de mesure selon la revendication 6, caractérisé en ce que l'étage à valeur seuil (26) peut être commuté en synchronisme avec le montage de mesure (22) et l'étage de normalisation (25).

8. Appareil de mesure selon une des revendications 1 à 7, caractérisé en ce que l'étage de normalisation (25) comporte un microprocesseur, de préférence, un microprocesseur librement programmable.

9. Appareil de mesure selon une des revendications 1 à 8, caractérisé en ce que l'appareil de mesure (10) peut être raccordé, via un raccord d'interface (14), à un ordinateur principal (16) et en ce que, de préférence, le microprocesseur librement programmable de l'étage de normalisation (25) peut être reprogrammé au départ de l'ordinateur principal (16).

10. Appareil de mesure selon une des revendications 1 à 9, caractérisé en ce que l'unité d'affichage (27) comporte une indication de grandeur caractéristique (29).

Fig.1

Fig. 2

**Fig.3**

**Fig.4**

**Fig.5**

**Fig.6**